# EUROPEAN PATENT APPLICATION

(11) **EP 3 270 605 A1**
(43) Date of publication of application: **17.01.2018**
(21) Application number: 16764863.3
(22) Date of filing: 10.03.2016
(51) Int. Cl.: H04Q 9/00, H04M 11/00, H05B 37/02

(54) **ILLUMINATION DEVICE**

(30) Priority: 13.03.2015 JP 2015051494
(71) Applicant: Balmuda Inc., Musashino-shi, Tokyo 180-0023 (JP)
(72) Inventor: TERAO, Gen, Musashino-shi Tokyo 180-0023 (JP); SATO, Tomoki, Musashino-shi Tokyo 180-0023 (JP); TSURU, Naoki, Musashino-shi Tokyo 180-0023 (JP)
(74) Representative: Isarpatent
(86) International application number: PCT/JP2016/057664
(87) International publication number: WO 2016/148033

(57) **Abstract**

Provided is an illumination device that enables a user's activity situation to be checked remotely and easily. An illumination device (10) according to the present invention has a light source (62), cameras (63) and (64) that recognizes a part of a user's body, a control part (110), a computation part (120) and an image processing part (130) that generate data relating to activities of the user, based on the recognition result of the cameras (63) and (64), and a communication processing part (150) that sends the data relating to activities of the user to a network (N).

## Description

### Technical Field

The present invention relates to an illumination device that enables a user's activity situation to be checked remotely.

### Background Art

For example, when children are studying at home, in most households parents cannot keep an eye on them around the clock, and the parents have no real way of knowing whether their son or daughter is actually at his or her desk studying.

Patent Literature 1 describes an illumination device that is provided with an image capturing camera and functions as an information communication terminal, and it is thought that setting such a device on their son or daughter's desk will enable parents to check, via TV phone system or the like, images captured by the image capturing camera and be aware of what their children are doing.

### Citation List

### Patent Literature

[PLT 1] JP 6-141214A

### Summary of Invention

### Technical Problem

However, with the illumination device described in Patent Literature 1, the checking person (parent) who views the images captured by the image capturing camera at any given time can only grasp how the user (child) of the illumination device appears at that time, and in order for the checking person to know whether the user is working (studying) diligently, he or she needs to at least check images captured by the image capturing camera in real time for a little while (or by playing back recorded images after the event). Even if the checking person is able to spend such time and check what the user is doing for a given period of time, it is not easy to grasp what activity the user is actually doing and to what extent.

The present invention was made in view of the above circumstances, and an object thereof is to provide an illumination device that enables the activity situation of a user to be checked remotely and easily.

### Solution to Problem

In order to resolve the above problem, the invention according to claim 1 is characterized by an illumination device that has illumination means, recognition means for performing recognition of a part of a body of a user, data generation means for generating data relating to activities of the user, based on a recognition result of the recognition means, and communication means for sending the data relating to activities of the user to a network.

The invention according to claim 2 is characterized in that, in the illumination device according to claim 1, the communication means transmits the data relating to activities of the user to a server or an information terminal device through the network.

The invention according to claim 3 is characterized in that, in the illumination device according to claim 1 or 2, the recognition means performs recognition of a hand of the user, and the data generation means generates the data relating to activities of the user, based on a situation of the hand of the user recognized by the recognition means.

The invention according to claim 4 is characterized in that, in the illumination device according to claim 3, the recognition means performs recognition of an article that is used by the user in activities, in addition to performing recognition of the hand of the user.

The invention according to claim 5 is characterized in that, in the illumination device according to claim 4, the recognition means performs recognition of paper material as the article.

The invention according to claim 6 is characterized in that, in the illumination device according to claim 5, the data generation means generates data relating to reading activity of the user, in a case where the recognition means has recognized the hand of the user and the paper material.

The invention according to claim 7 is characterized in that, in the illumination device according to claim 6, the data generation means generates data relating to the reading activity of the user, based on a detection result of page turning by the user.

The invention according to claim 8 is characterized in that, in the illumination device according to one of claims 4 to 7, the recognition means performs recognition of a writing implement as the article.

The invention according to claim 9 is characterized in that, in the illumination device according to claim 8, the data generation means generates data relating to writing activity of the user, in a case where the recognition means recognizes the hand of the user and the writing implement.

Because the illumination device according to the present invention has recognition means for recognizing a part of the body of a user, data generation means for generating data relating to activities of the user, based on a recognition result of the recognition means, and communication means for sending the data relating to activities of the user to a network, it will be possible for a checking person who wants to check the activity situation of the user or for a device for that purpose to check the activity situation remotely and easily, by connecting a device capable of receiving the data relating to activities of the user to the network.

In particular, in the case where the device that is connected to the network is a server or an information terminal device, the data generation load on the illumination device can be lightened, by assigning most of the processes for generating the data that is ultimately required to the server or the information terminal device having a high processing capacity. Furthermore, in the case where the device that is connected to a network is an information terminal device of the checking person who wants to check the activity situation of the user, the checking person is able to check the activity situation directly and quickly.

Also, because it is conceivable, in the case where the recognition means recognizes the hands of the user and the data generation means generates data based on the situation of the hands of the user, that most activities of the user under illumination are performed using his or her hands, collecting information to be made available for data generation is facilitated, and information can be collected efficiently and accurately, especially with regard to reading activity and writing activity that are often performed under illumination. If data generation is performed based on a result of detecting page turning by the user, the accuracy of generated data relating to reading activity will be extremely high.

### Advantageous Effects of Invention

According to the present invention, an illumination device that enables the activity situation of a user to be checked remotely and easily can be obtained.

### Brief Description of Drawings

FIG. 1 is an explanatory diagram showing a state where an illumination device according to a mode for carrying out the invention is set on a desk.
FIG. 2 is an explanatory diagram showing the illumination device of FIG. 1.
FIG. 3 is an explanatory diagram showing a head part of the illumination device of FIG. 1.
FIG. 4 is a block diagram showing a state where the illumination device of FIG. 1 is connected to a network.
FIG. 5 is a flowchart showing operations by the illumination device of FIG. 1.
FIG. 6 is an explanatory diagram showing an image photographed of a user holding a writing implement.
FIG. 7(a) is an explanatory diagram showing an image photographed of a user reading a book held with both hands, and (b) is an explanatory diagram showing an image photographed of the user of (a) turning a page of the book with both hands.
FIG. 8(a) is an explanatory diagram showing an image photographed of a user about to turn a page of a book with one hand, and (b) is an explanatory diagram showing an image photographed of the user of (a) having turned the page of the book with one hand.
FIG. 9 is an explanatory diagram showing the temporal change in distance between both hands in the case where the user turns the pages of a book with both hands.
FIG. 10 is a flowchart showing processing for determining the occurrence of page turning by the user.
FIG. 11 is an explanatory diagram showing exemplary display of data relating to activities of the user on an information terminal device of a checking person.

### Description of Embodiments

Modes for carrying out the invention will be described using the drawings.

### Configuration of Illumination device

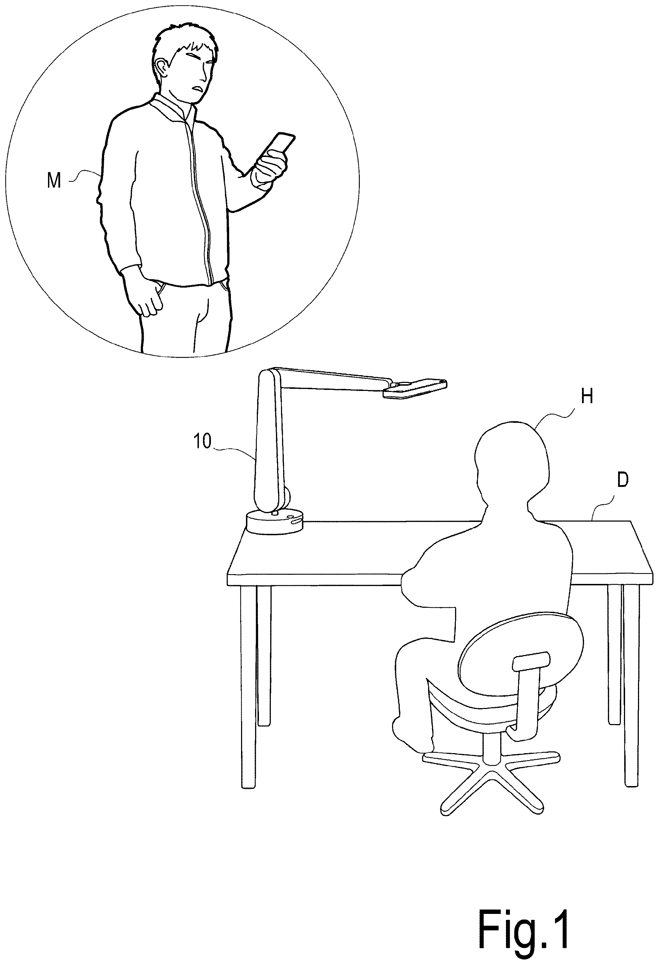

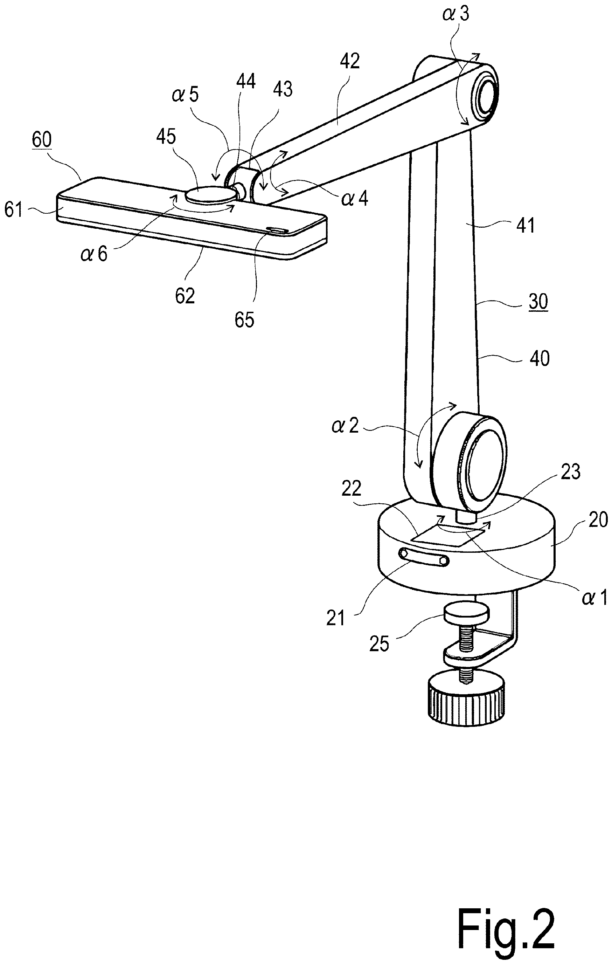

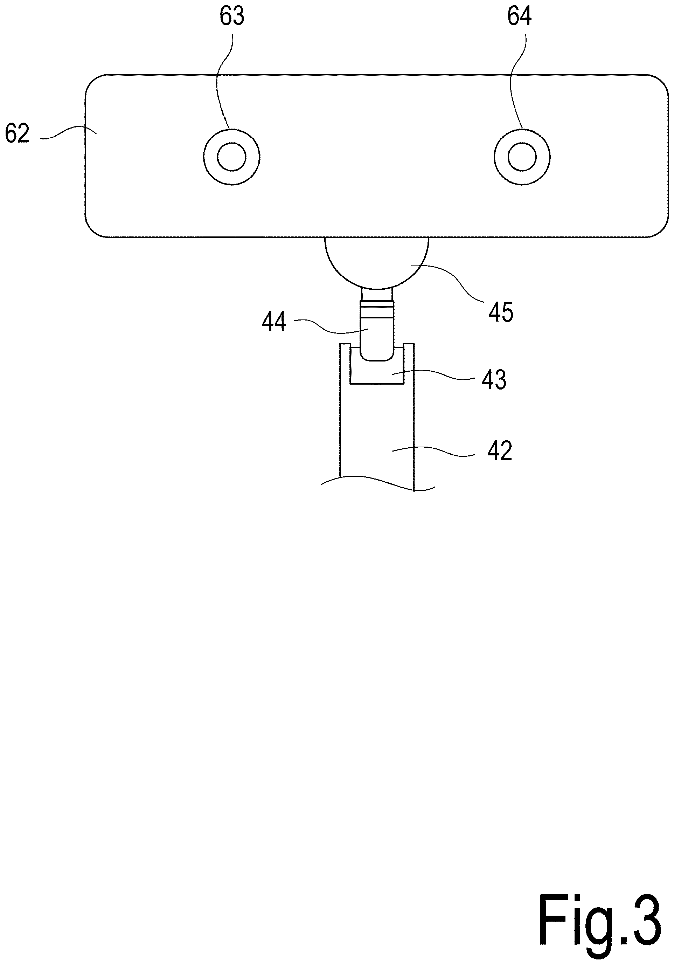

FIGS. 1 to 3 show an illumination device according to the present invention. This illumination device 10 includes a base part 20 that is placed on a desk D, a fixing clamp 25 for fixing the base part 20 to the desk D, and an arm mechanism 30 whose base end side is attached to the base part 20, whose tip end side has a head part 60 provided with a light source 62 which will be discussed later attached thereto, and that positions the light source 62 upward of the desk D.

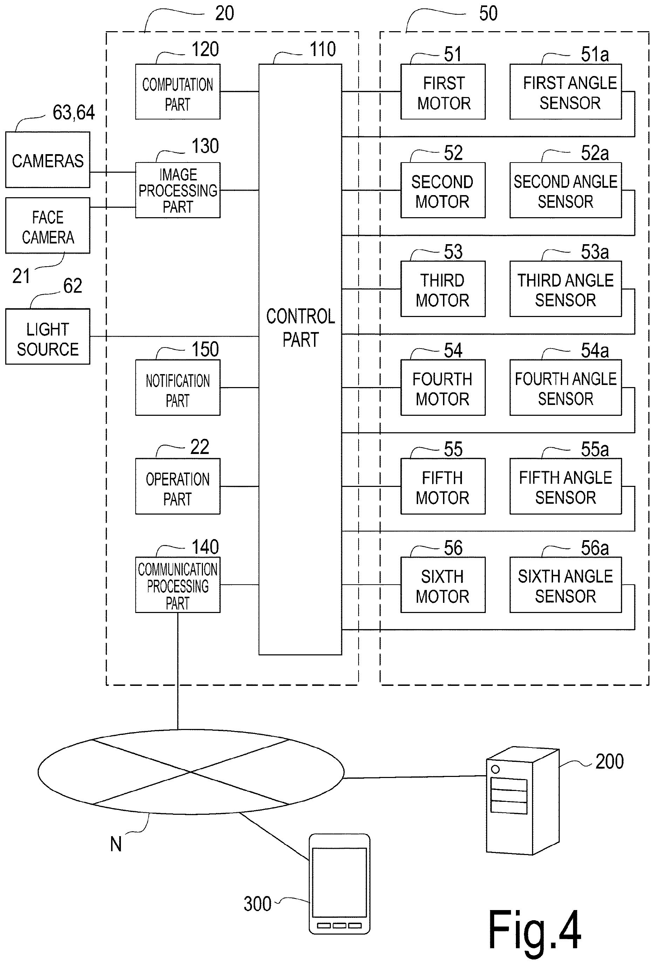

A face camera 21 that is able to photograph the face of a user H who is sitting in front of the illumination device 10 is provided on the front surface of a casing of the base part 20, and a touch panel-type operation part 22 that is used in turning illumination ON/OFF, various settings and mode changing is provided on the upper surface of the casing of the base part 20. Also, as shown in FIG. 4, a control part 110, a computation part 120, an image processing part 130, a communication processing part 140 and a notification part 150 are provided inside the casing of the base part 20.

The arm mechanism 30 includes an arm part 40 and an arm operation part 50 that operates the arm part 40.

The arm part 40 includes a first arm 41 that is provided on a rotation shaft 23 built into the base part 20 and pivots in the directions of arrow α1(about a vertical axis) and the directions of arrow α2 (about a horizontal axis), a second arm 42 that is provided on the tip end side of the first arm 41 and pivots in the directions of arrow α3 (about a horizontal axis), an elevation angle adjustment member 43 that is provided on the tip end side of the second arm 42 and pivots in the directions of arrow α4 (about a horizontal axis), a swinging member 44 that is provided on the elevation angle adjustment member 43 and pivots in the directions of arrow α5, and a head attachment part 45 that is provided on the swinging member 44. The head part 60 is attached to the head attachment part 45 so as to pivot freely in the directions of arrow α6.

The arm operation part 50 includes a first motor 51 that pivots the rotation shaft 23 in the directions of arrow α1 and a first angle sensor 51a that detects an angular position of the first arm 41 in the directions of arrow α1, a second motor 52 that pivots the first arm 41 in the directions of arrow α2 and a second angle sensor 52a that detects an angular position of the first arm 41 in the directions of arrow α2, a third motor 53 that pivots the second arm 42 in the directions of arrow α3 and a third angle sensor 53a that detects an angular position of the second arm 41 in the directions of arrow α3, a fourth motor 54 that pivots the elevation angle adjustment member 43 in the directions of arrow α4 and a fourth angle sensor 54a that detects an angular position of the elevation angle adjustment member 43 in the directions of arrow α4, a fifth motor 55 that pivots the swinging member 44 in the directions of arrow α5 and a fifth angle sensor 55a that detects an angular position of the swinging member 44 in the directions of arrow α5, and a sixth motor 56 that pivots the head part 60 in the directions of arrow α6 and a sixth angle sensor 56a that detects an angular position of the head part 60 in the directions of arrow α6.

The head part 60 includes a head base 61 that is rectangular in plan view, the light source 62 that is provided on the lower surface of the head base 61 and is for lighting up the top of the desk D, cameras 63 and 64 that are provided within the light emission surface of the light source 62 and are able to photograph the user H at work (the state on the desk D), and an illuminance sensor 65 that is provided on the upper surface of the head base 61 and is for detecting the environmental situation.

The operation part 22, the computation part 120, the image processing part 130, the communication processing part 140 and the notification part 150 are connected to the control part 110, which is configured to cooperatively control these parts and to perform lighting control of the light source 62 and operation control of the arm operation part 50.

The computation part 120 performs various types of computation based on the image processing result of the image processing part 130 and the like.

The image processing part 130 is connected to the face camera 21 and the cameras 63 and 64, and performs image processing of images photographed by the face camera 21 and the cameras 63 and 64. Here, a large amount of training data (numerical data) indicating features of the user's face and hands, writing implements that are used by the user, and paper material (books, documents, notebooks, etc.) is registered in the image processing part 130, and this training data is used in image discrimination realized by software created using Haar-like features and the AdaBoost algorithm.

The communication processing part 140 is connected to a server 200 and an information terminal device 300 of the checking person through a network (communication channel) N, and performs communication processing of the illumination device 10 with the server 200 or the information terminal device 300.

The notification part 150 has a function of issuing a notification to the user by light, sound, display or movement, according to data received through the network N. Specifically, information relating to methods for flashing of the light source 62, audio/music playback from a speaker (illustration omitted), display on the display of the operation part 22, and operation of the arm mechanism 30 and the head part 60 is generated and transmitted to the control part 110.

### Modes of Illumination Device

In the illumination device 10, three modes are provided, namely, a "standby mode", a "device setting mode", and a "normal operation mode".

The "standby mode" is a mode for performing standby processing of the illumination device 10, and the illumination device 10 transitions to this mode when the main power supply of the illumination device 10 is turned on (when a power plug is inserted in an electrical socket in the case where there is no main power supply). In the "standby mode", the control part 110 does not perform lighting control of the light source 62 or operation control of the arm operation part 50.

The "device setting mode" is a mode for configuring various settings for "connecting the communication processing part 140 to the network N", "registering the server 200/information terminal device 300 in the communication processing part 140", and "calibration".

Here, "connecting the communication processing part 140 to the network N" conceivably involves connecting the communication processing part 140 to the network N utilizing a WPS function, in the case where the network N is a wireless LAN compatible with Wi-Fi (registered trademark), for example. In other words, as a result of the user or the like operating the operation part 22 of the illumination device 10 after pressing a push button for WPS connection on a wireless LAN router (illustration omitted) serving as an access point of the wireless LAN, the communication processing part 140 acquires an ESSID and an encryption key broadcast from the wireless LAN router. Using the ESSID and the encryption key, the communication processing part 140 is connectable to Wi-Fi. The network N need only be a network that enables the illumination device 10 to mutually transmit and receive data with respect to the server 200 or the information terminal device 300, such as ZigBee (registered trademark), Bluetooth (registered trademark), a mobile network provided by a mobile phone carrier or the like, the Internet, or wired LAN or serial communication, rather than a wireless LAN compatible with Wi-Fi.

"Registering the server 200/information terminal device 300 in the communication processing part 140" involves registering information for identifying the server 200/information terminal device 300 on the network N, before the illumination device 10 performs data transmission/reception. For example, when the server 200/information terminal device 300 connects to the illumination device 10 in the case where the illumination device 10 is waiting for connection by UDP communication from an arbitrary device on the same LAN, the server 200/information terminal device 300 acquires the address registered in the communication processing part 140, and transmits the address of the server 200/information terminal device 300 to the illumination device 10, and the illumination device 10 registers the address of the server 200/information terminal device 300 in the communication processing part 140. It thereby becomes possible for the server 200/information terminal device 300 to perform data transmission/reception with the communication processing part 140 at an arbitrary timing, while the illumination device 10 is performing data transmission/reception within the same LAN.

"Calibration" involves adding feature amounts to the training data, in order to improve the recognition accuracy, when the illumination device 10 performs recognition of the face or hands of the user or a writing implement that is used by the user. Specifically, when the user or the like photographs a plurality of images of the face or hands of the user or a writing implement that is used by the user with the face camera 21 or the cameras 63 and 64 (e.g., with regard to the hands, images of the hands in a number of poses (hands open, hands clenched, hands holding the writing implement) are photographed, and with regard to the writing implement, images of the writing implement in a number of states (held in a hand, laid on the desk) are photographed), the image processing part 130 extracts the face or hands of the user or a portion of the writing implement from each photographed image based on training data that is already registered, and the computation part 120 calculates information serving as features of the user's face or hands or the writing implement from the plurality of the extracted images, and adds this information to the training data.

The "normal operation mode" is a mode that is used in the case where the user is working under illumination, and will be described in detail next.

### Operation of Illumination Device: Outline

The illumination device 10, under the control of the control part 110, enters the "standby mode" when the main power supply thereof is switched on, lights the light source 62 and enters the "normal operation mode" when illumination is turned on on an illumination ON/OFF screen of the operation part 22, and extinguishes the light source 62 and enters the "standby mode" when illumination is turned off. To set the illumination device 10 to the "device setting mode", the user need only select this mode on a mode change screen of the operation part 22.

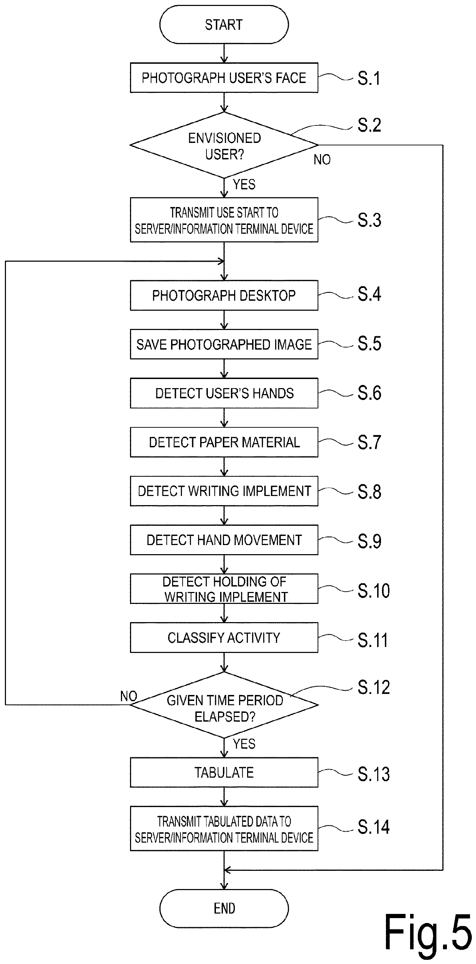

When the illumination device 10 enters the "normal operation mode", the control part 110 first photographs a facial image of the user H using the face camera 21 (step 1: indicated as "S.1" in FIG. 5; the same applies below). The control part 110 compares the feature amount that is extracted by the image processing part 130 from the photographed images with the training data relating to facial images of the user added in the calibration, and identifies whether the user H is a user envisioned in advance (step 2).

In the case where the user H is a user envisioned in advance, the control part 110 assumes that a specific user (e.g., child) has started using the illumination device 10, and transmits information thereof to the server 200 or to the information terminal device 300 of a checking person M (e.g., parents of the child who is the user) through the communication processing part 140 (step 3). The information transmitted to the server 200 from the illumination device 10 is saved on the server 200, and can be checked from the information terminal device 300 at any time.

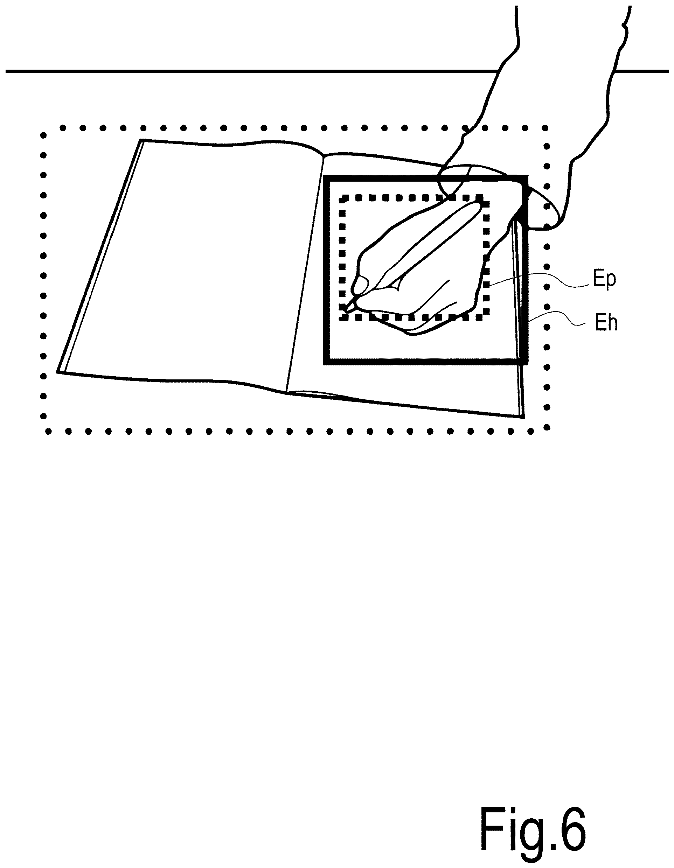

Next, the control part 110 photographs the top of the desk D using the cameras 63 and 64 (step 4), saves these photographed images (step 5), and respectively performs detection of the hands of the user H, paper material (book, document, notebook, etc.) and a writing implement from the photographed images using the image processing part 130 (steps 6, 7, and 8). Furthermore, the control part 110 also detects whether a detected hand is moving (this can be determined from the time-series difference of a plurality of photographed images that are saved), and whether the hand is holding the writing implement (it can be determined that the hand is holding the writing implement if a region Eh where the hand was detected in the photographed image overlaps with a region Ep where the writing implement was detected, as shown in FIG. 6) (steps 9 and 10). The detection referred to here is performed by software that uses Haar-like feature amounts and the AdaBoost algorithm, as described above, although to prevent misdetection, skin color and hand movement may be taken into consideration with regard to detection of the hands of the user H, and movement and the outline shape of the writing implement may be taken into consideration with regard to detection of the writing implement.

Next, the control part 110 classifies activities of the user into "reading", "writing", "other" and "no activity", as illustrated in Table 1 (step 11).

**Table 1**

| Case | Hand is detected | Paper is detected | Holding writing implement | Hand holding writing implement is moving over paper | Classification result |
|---|---|---|---|---|---|
| 1 | × | × | -- | -- | no activity |
| 2 | × | ○ | -- | -- | other |
| 3 | ○ | × | × | -- | other |
| 4 | ○ | × | ○ | -- | writing |
| 5 | ○ | ○ | × | -- | reading |
| 6 | ○ | ○ | ○ | × | reading |
| 7 | ○ | ○ | ○ | ○ | writing |

Here, "other" is an activity such as clay work or the like in which a hand or paper material is detected but that does not come under either "reading" or "writing", and the case where a hand or paper material is not detected is classified as "no activity".

The control part 110 repeats the processing of steps 4 to 11 (step 12), tabulates information relating to activities every given period of time, and transmits the information to the server 200 or the information terminal device 300 (steps 13 and 14).

### Operations of Illumination Device: At Time of Reading Activity

In the case where page turning of a book occurs when the activity is "reading", the control part 110 may detect the reading time period with high precision as follows.

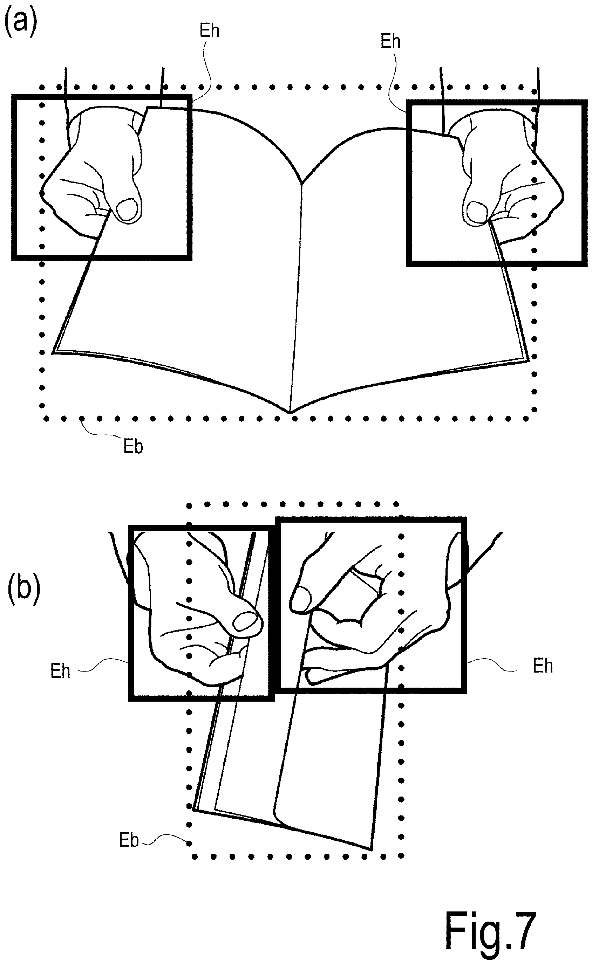

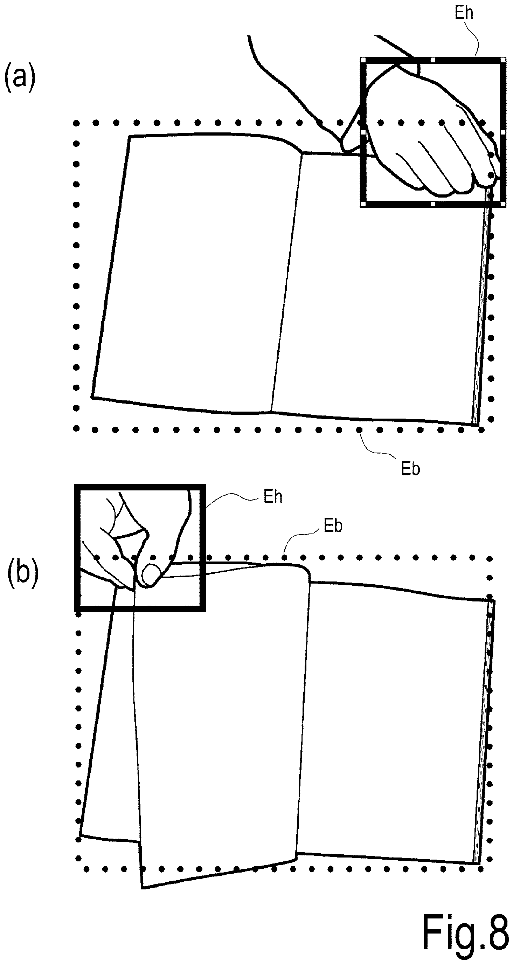

That is, TR=ΣTi is set as the reading time period, where page turning occurs periodically during the reading time period, and the time from when page turning occurs until when an elapsed time period from the occurrence of page turning times out or from when page turning occurs until when the next page turning occurs is given as the reading time period Ti of that page. Although page turning can be derived by the way in which the positions of the hands move, the case where pages of a book are turned with both hands and the case where pages are turned with one hand are envisioned, and the case where the number of regions Eh of the hand that overlap with the region Eb of the book in a photographed image is two, as shown in FIG. 7, is considered to be the case where both hands are touching the book and pages are turned with both hands, and the case where the number of regions Eh of the hand that overlap with the region Eb of the book in a photographed image is one, as shown in FIG. 8, is considered to be the case where one hand is touching the book and pages are turned with one hand (in short, the case where pages of a book are turned with both hands and the case where pages of a book are turned with one hand are identified by the number of hands that are touching the book).

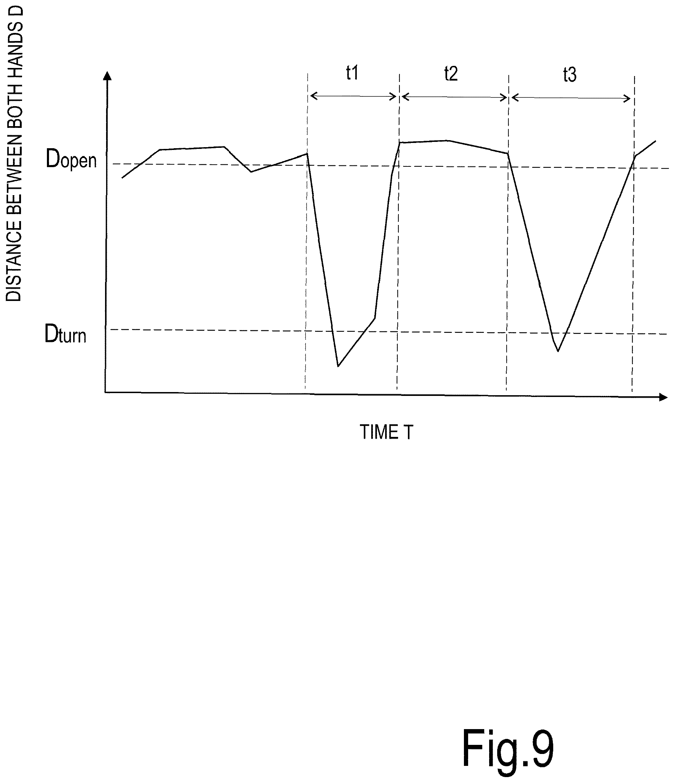

In the case where pages of a book are turned with both hands, as shown in FIG. 7(b), the positions of both hands temporarily become closer. In view of this, the distance D between the regions Eh of the two hands is measured while the regions Eh of the hand are overlapping the region Eb of the book, and the measurement result is recorded together with the time, and in the case where the change D>Dopen → D<Dturn → D>Dopen (Dopen: minimum distance for recognizing that a page is open; Dturn: threshold for determining that a page has been turned) occurs, as shown in FIG. 9, it can be determined that page turning has been performed if the time intervals t1, t2 and t3 of this change satisfy t1, t3<Tmax (Tmax: maximum time for recognizing that page turning has been performed).

On the other hand, in the case where pages of a book are turned with one hand, page turning is determined from the movement pattern of the position of the hand with respect to the book. In other words, in the case where pages are turned with one hand, the hand moves from one edge of the book to the other edge, as shown in FIGS. 8(a) and 8(b), and thus it can be determined that page turning has been performed at the time that this phenomenon occurs (it is also determined whether the interval time t of page turning satisfies t<Tmax, similarly to the above).

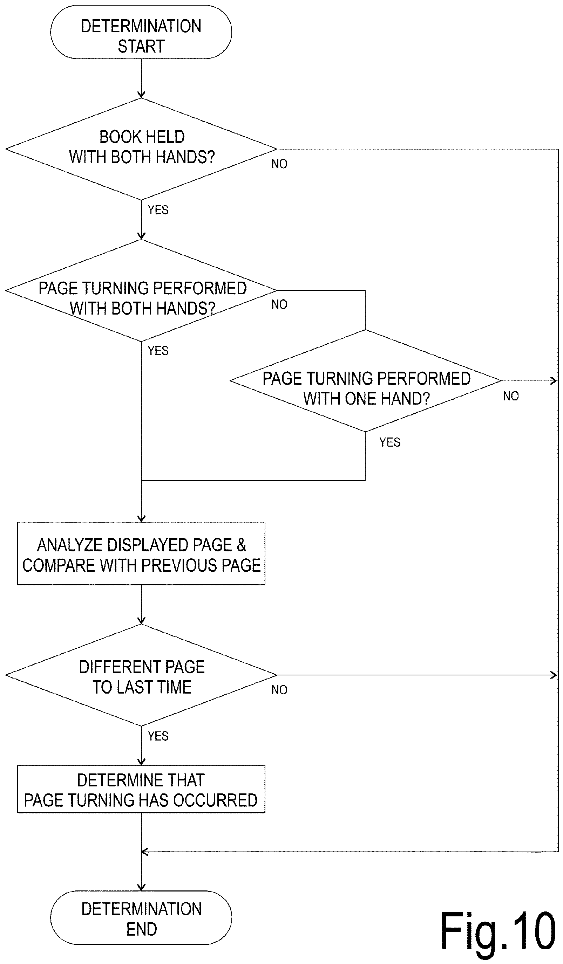

When page turning is performed, the book is photographed each time to acquire a photographed image of the book, which is then subjected to OCR analysis and saved, thus enabling the occurrence of page turning to be reliably determined through comparison with the contents of the page that was being referred to prior to the page turning (FIG. 10).

Also, by giving an identifier to the new page at the timing of page turning, or giving a mark specifying the type of book and the number of pages such as a QR Code (registered trademark) to the book and reading this mark with a camera, list information about the time of page turning and the page referred to at that time can be acquired. This list information reveals what pages the user was viewing for a long time, and this information, if collected for a large number of users, will be useful for improving lessons and improving textbooks in schools, preparatory schools, publishing companies and the like.

### Operation of Illumination Device: At Time of Writing Activity

In the case where the activity is "writing", the control part 110 may detect the writing time period with high precision as follows.

That is, photographed images are obtained periodically through repetition of steps 4 to 11, and, in the case of "writing", it is checked whether the writing target region differs between the photographed image at time t and the following photographed image at time (t+T), and writing time period Tw=Ek · T (where coefficient k is 1 in the case of writing and 0 in other cases) is derived, assuming that the user did some writing during time period T from time t to time (t+T) in the case where there is a difference, and that the user did not do any writing during time period T from time t to time (t+T) in the case where there is not a difference. With regard to this writing time period, accuracy may be enhanced, by providing a vibration sensor in the base part 20 of the illumination device 10 or the like, and not including time spans in which vibration of the desk D due to writing is not detected in the writing time period.

Also, with regard to the written contents that are obtained through differences in photographed images, the amount of writing may be derived, by calculating the number of characters through image recognition, or simply by the proportion of the writing target region or the like that is occupied by the image of the written contents.

### Display of Information Terminal Device

The control part 110 tabulates information relating to activities every given time period and transmits the information to the server 200 or the information terminal device 300 (steps 13 and 14), and, at this time, it is desirable for the cumulative time of the activity state and information on the change in time period of the activity state to be displayed directly on the information terminal device 300 (or via the server 200) and visualized such that the checking person can comprehend the contents of the activities at a glance.

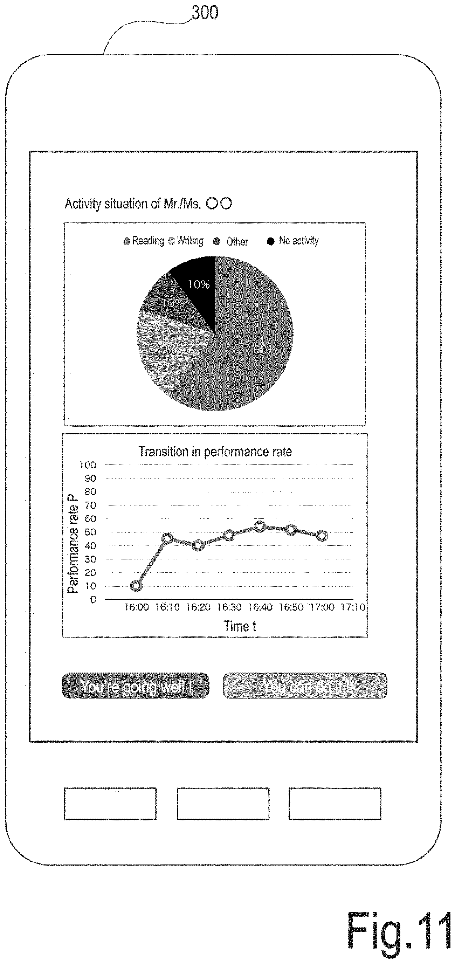

Specifically, by making it possible to confirm the proportion of each activity and the time-series change in those activities, the checking person will be able to check how much attention the user is currently giving to an activity, or what activities the user has performed so far and to what extent. Various ways of organizing this information are conceivable, and, as shown in FIG. 11, for example, by converting the proportions of activity contents for the last one hour into a pie chart, converting the performance rate into a line graph, and displaying this information on the information terminal device 300, it is remotely and easily understood that the user spent little time on "writing" despite having homework that involves a lot of writing activity, and that the user is concentrating on an activity due to the performance factor transitioning at a high value (if the activity is "reading" and "writing", performance rate P = {(reading time period + writing time period)/elapsed time period}).

In FIG. 11, buttons indicating "You're going well!" and "You can do it!" are displayed on a lower part of the screen display, and when the checking person presses one of these buttons, a message signal corresponding to the button is transmitted from the information terminal device 300 to the illumination device 10 through the network N, and the control part 110, upon receiving the message signal, issues a notification corresponding to the message "You're going well!" or "You can do it!" using the notification part 150 by means such as light, sound, display on the display of the operation part 22 or swinging the arm part 40.

### Operation and Effect of Illumination Device

The illumination device 10 according to this embodiment has the cameras 63 and 64 that recognize the hands of a user, the control part 110, the computation part 120 and the image processing part 130 that generate data relating to activities of the user, based on the recognition results of the cameras 63 and 64, and the communication processing part 140 that sends the data relating to activities of the user to the network N, and it thus becomes possible for a checking person who wants to check the activity situation of a user to remotely as well as easily and quickly check the activity situation of that user, by connecting an information terminal device 300 capable of receiving this data to the network N.

Also, because the cameras 63 and 64 recognize the user's hands and data is generated based on the situation of the user's hands, information can be collected efficiently and reliably with regard to reading activity and writing activity that involve the user using his or her hands.

Although a mode for carrying out the present invention has been illustrated above, the embodiments of the present invention are not limited to the abovementioned mode, and may be modified as appropriate without departing from the gist of the invention.

For example, although recognition of the hands as a part of the user's body is performed using cameras in the above mode, a configuration may be adopted in which the position of the eyes or the direction in which the face is oriented is derived by detecting the user's eyes or the outline of the user's face, and performing recognition of such parts other than the hands, by counting the time that the face is oriented toward the desktop as the activity time period, or determining that the user is getting tired when the distance between the eyes and the desk decreases monotonously and that the user is concentrating when this distance fluctuates.

A configuration may be also adopted in which recognition of a part of the user's body is performed from a relief image of the desktop that is obtained by performing distance measurement through reflection of a laser beam or a millimeter wave radar with respect to the entire desktop or from a temperature distribution image of the desktop obtained by thermography, rather than using cameras as means for recognizing a part of the body.

Furthermore, generation of data relating to activities of the user in the illumination device may be minimized to photographing images and the like, and subsequent processing may be performed in an external device such as a server or an information terminal device, and even the messages to be made available for selection by a checking person and displayed on the information terminal device need not, of course, be supportive messages such as "You're going well!" and "You can do it!"

### Industrial Applicability

The present invention can be utilized in cases where parents, schools, preparatory schools and the like check on the study situation of children at home or the like, cases where the user grasps the work situation of workers engaged in activities under illumination, and other wide-ranging applications, and is especially suited to assisting children who are studying by themselves.

### List of Reference Numerals

- 10: Illumination device
- 20: Base part
- 21: Face camera
- 22: Operation part
- 23: Rotation shaft
- 25: Fixing clamp
- 30: Arm mechanism
- 40: Arm part
- 41: First arm
- 42: Second arm
- 43: Elevation angle adjustment member
- 44: Swinging member
- 45: Head attachment part
- 50: Arm operation part
- 51: First motor
- 51a: First angle sensor
- 52: Second motor
- 52a: Second angle sensor
- 53: Third motor
- 53a: Third angle sensor
- 54: Fourth motor
- 54a: Fourth angle sensor
- 55: Fifth motor
- 55a: Fifth angle sensor
- 56: Sixth motor
- 56a: Sixth angle sensor
- 60: Head part
- 61: Head base
- 62: Light source (illumination means)
- 63, 64: Camera (recognition means)
- 110: Control part (data generation means)
- 120: Operation part (data generation means)
- 130: Image processing part (data generation means)
- 140: Communication processing part (communication means)
- 150: Notification part
- 200: Server
- 300: Information terminal device
- N: Network
- H: User
- M: Checking person
- D: Desk

## Claims

1. An illumination device comprising:
an illumination means;
a recognition means for performing recognition of a part of a body of a user;
a data generation means for generating data relating to activities of the user, based on a recognition result of the recognition means; and
a communication means for sending the data relating to activities of the user to a network.

2. The illumination device according to claim 1,
wherein the communication means transmits the data relating to activities of the user to a server or an information terminal device through the network.

3. The illumination device according to claim 1 or 2,
wherein the recognition means performs recognition of a hand of the user, and
the data generation means generates the data relating to activities of the user, based on a situation of the hand of the user recognized by the recognition means.

4. The illumination device according to claim 3,
wherein the recognition means performs recognition of an article that is used by the user in activities, in addition to performing recognition of the hand of the user.

5. The illumination device according to claim 4,
wherein the recognition means performs recognition of paper material as the article.

6. The illumination device according to claim 5,
wherein the data generation means generates data relating to reading activity of the user, in a case where the recognition means has recognized the hand of the user and the paper material.

7. The illumination device according to claim 6,
wherein the data generation means generates data relating to the reading activity of the user, based on a detection result of page turning by the user.

8. The illumination device according to any one of claims 4 to 7,
wherein the recognition means performs recognition of a writing implement as the article.

9. The illumination device according to claim 8,
wherein the data generation means generates data relating to writing activity of the user, in a case where the recognition means recognizes the hand of the user and the writing implement.
